# EUROPEAN PATENT APPLICATION

(11) **EP 4 818 237 A1**
(43) Date of publication of application: **07.10.2026**
(21) Application number: 25758551.3
(22) Date of filing: 12.02.2025
(51) Int. Cl.: C08J 5/18, C08L 23/00, C08L 101/00, C08K 3/013, B32B 27/18, B32B 27/32, B32B 27/12, B32B 27/08, B32B 9/02, B32B 9/04

(54) **WATERPROOF AND MOISTURE-PERMEABLE FILM**

(30) Priority: 20.02.2024 KR 20240024115
(71) Applicant: W-Scope Korea Co., Ltd., Cheongju-si, Chungcheongbuk-do 28122 (KR); W-Scope Chungju Plant Co., Ltd., Daesowon-myeon Chungju-si, Chungcheongbuk-do 27461 (KR)
(72) Inventor: RYU, Kyoung Sun, Cheongju-si, Chungcheongbuk-do 28122 (KR); PARK, Pyung Yong, Cheongju-si, Chungcheongbuk-do 28122 (KR); JUN, Min Il, Cheongju-si, Chungcheongbuk-do 28122 (KR); KIM, Byung Hyun, Cheongju-si, Chungcheongbuk-do 28122 (KR)
(74) Representative: BCKIP Part mbB
(86) International application number: PCT/KR2025/002040
(87) International publication number: WO 2025/178305

(57) **Abstract**

One aspect of the present invention provides a waterproof moisture-permeable film comprising a porous film having: a hydrophobic region comprising a polyolefin; and a hydrophilic region comprising a hydrophilic polymer and a hydrophilic inorganic material dispersed in the hydrophobic region; wherein the content of the hydrophilic polymer in the porous film is 0.1 to 30 wt%.

## Description

### [Technical Field]

The present invention relates to a waterproof moisture-permeable film, and more particularly, to a waterproof moisture-permeable film capable of overcoming the trade-off among moisture permeability, waterproofness, durability, and mechanical properties, thereby achieving an improved balance among these properties.

### [Background Art]

Clothing, shoes, gloves, hats, and the like often include a layer having moisture permeability and waterproofness, a so-called waterproof moisture-permeable layer, which can keep a wearer dry in humid conditions to provide comfortable wearability. Specifically, the waterproof moisture-permeable layer allows water vapor generated from sweat inside the clothing to permeate and discharge to the outside, while preventing external moisture from permeating into the inside of the clothing, thereby keeping the wearer dry against rain or snow (waterproof), discharging sweat (breathable), helping to regulate the wearer's body temperature, and maintaining comfort. As interest in health and leisure activities has grown in recent years, fabrics including a waterproof moisture-permeable layer are being applied in various fields.

Electrospun nanofiber webs used as waterproof moisture-permeable layers have lower mechanical properties such as strength compared to conventional film-type fabrics because the nanofibers are not fixed, and also have problems of low durability such as easy delamination and scratching. In response, waterproof moisture-permeable fabrics in which a nanofiber web is heatpressed to a fabric coated with a liquid adhesive are known; however, the liquid adhesive reduces and/or closes the pores of the fabric and nanofiber web, thereby reducing moisture permeability, and uneven application of the liquid adhesive reduces moisture permeation efficiency. In addition, attempts have been made to improve scratch resistance and durability by coating the nanofiber web with a hydrophilic polymer such as polyurethane; however, in this case as well, the original advantages of the nanofiber web - breathability, moisture permeability, light weight, softness, and tactile feel - are reduced, and noise is generated and increased during bending and/or friction.

As a representative waterproof moisture-permeable fabric, a waterproof moisture-permeable film manufactured using a microporous PTFE membrane and hydrophilic polyurethane is currently used to manufacture GORE-TEX^{®} fabric laminates. The pore size of the PTFE membrane is larger than water molecules, but the pores are much smaller than individual water droplets, so water vapor can pass through the membrane while water droplets cannot. However, the fluorine-based resin, the main raw material of GORE-TEX^{®} fabric, is expensive and heavy, and in particular, regulations are being tightened because it is harmful to the human body and the surrounding environment. In response, techniques of irradiating plasma onto non-fluorine-based fabrics such as polyester to impart water repellency only to one side of the fabric have been attempted; however, plasma treatment increases the brittleness of the material, resulting in a drastic decrease in durability, and moisture permeability is reduced, causing discomfort to the wearer.

### [Detailed Description of the Invention]

### [Technical Problem]

The present invention is intended to solve the problems of the prior art described above, and an object of the present invention is to provide a waterproof moisture-permeable film capable of overcoming the trade-off among moisture permeability, waterproofness, durability, and mechanical properties to achieve and improve a balanced realization of these properties.

### [Technical Solution]

One aspect of the present invention provides a waterproof moisture-permeable film comprising a porous film having: a hydrophobic region comprising a polyolefin; and a hydrophilic region comprising a hydrophilic polymer and a hydrophilic inorganic material dispersed in the hydrophobic region; wherein the content of the hydrophilic polymer in the porous film is 0.1 to 30 wt%.

In one embodiment, the content of the hydrophilic inorganic material in the porous film may be 0.1 to 30 wt%.

In one embodiment, the content of the hydrophilic region in the porous film may be 0.1 to 60 wt%.

In one embodiment, the weight average molecular weight of the polyolefin may be 200,000 to 800,000, the content of the hydrophilic polymer in the porous film may be 0.1 to 25 wt%, the content of the hydrophilic inorganic material in the porous film may be 0.1 to 25 wt%, and the content of the hydrophilic region in the porous film may be 0.2 to 45 wt%.

In one embodiment, the weight average molecular weight of the polyolefin may be 900,000 to 2,000,000, the content of the hydrophilic polymer in the porous film may be 25 to 30 wt%, the content of the hydrophilic inorganic material in the porous film may be 25 to 30 wt%, and the content of the hydrophilic region in the porous film may be 45 to 60 wt%.

In one embodiment, the polyolefin may comprise one selected from the group consisting of polyethylene, polypropylene, polybutylene, polymethylpentene, and combinations of two or more thereof.

In one embodiment, the hydrophilic polymer may comprise one selected from the group consisting of ethylene vinyl acetate, ethylene vinyl alcohol, polyvinyl alcohol, polyacrylic acid, polyoxyethylene-polyoxypropylene block copolymer, polyethylene glycol, polyethylene oxide, polyvinylpyrrolidone, polyvinyl acetal, polyvinyl butyral, cellulose derivatives, polyurethane, polyamide, polyester, glycerol, and combinations of two or more thereof.

In one embodiment, the hydrophilic inorganic material may comprise one selected from the group consisting of SiO₂, AlO(OH), Mg(OH)₂, Al(OH)₃, TiO₂, BaTiO₃, Li₂O, LiF, LiOH, Li₃N, BaO, Na₂O, Li₂CO₃, CaCO₃, LiAlO₂, Al₂O₃, SiO, SnO, SnO₂, PbO₂, ZnO, P₂O₅, CuO, MoO, V₂O₅, B₂O₃, Si₃N₄, CeO₂, Mn₃O₄, Sn₂P₂O₇, Sn₂B₂O₅, Sn₂BPO₆, talc, and combinations of two or more thereof.

In one embodiment, the porosity of the porous film may be 60 to 90 vol%.

In one embodiment, the average pore size of the porous film may be 100 to 200 nm.

In one embodiment, the rate of change in machine direction (MD) length of a water droplet dropped to the surface of the porous film measured for 5 minutes immediately after the water droplet is dropped may be 20 to 50%, and the rate of change in transverse direction (TD) length may be 20 to 50%.

In one embodiment, the moisture vapor transmission rate (MVTR) of the porous film measured in accordance with EN ISO 15496 may be 5,000 to 20,000 g/m²/24hr.

In one embodiment, the porous film may satisfy at least one of the following conditions (i) to (iv).
(i) thickness of 1 to 30 µm, (ii) puncture strength of 500 gf or more, (iii) machine direction (MD) tensile strength of 1,000 to 3,000 kgf/cm², (iv) transverse direction (TD) tensile strength of 1,000 to 3,000 kgf/cm².

Another aspect of the present invention provides a laminate article comprising: the waterproof moisture-permeable film; and at least one layer bonded in surface contact with the waterproof moisture-permeable film.

In one embodiment, the layer may comprise one selected from the group consisting of a textile layer, a polymer film layer, a natural leather layer, a synthetic leather layer, a fleece layer, and combinations of two or more thereof.

### [Effect of the Invention]

The waterproof moisture-permeable film according to one aspect of the present invention comprises a porous film having a hydrophobic region comprising a polyolefin, and a hydrophilic region comprising a hydrophilic polymer and a hydrophilic inorganic material dispersed in the hydrophobic region, wherein by controlling the contents of the hydrophilic polymer, the hydrophilic inorganic material, and the hydrophilic region comprising these in the porous film, as well as the weight average molecular weight of the polyolefin, the trade-off among moisture permeability, waterproofness, durability, and mechanical properties can be overcome to achieve and improve a balanced realization of these properties.

The effects of the present invention are not limited to those described above, and should be understood to include all effects that can be inferred from the configuration of the invention described in the detailed description or claims of the present invention.

### [Modes of the Invention]

Hereinafter, the present invention will be described. However, the present invention may be embodied in many different forms and is not limited to the embodiments described herein.

Throughout the specification, when a part is "connected" to another part, this includes not only the case of being "directly connected" but also the case of being "indirectly connected" with another member interposed therebetween. In addition, when a part "comprises" a certain component, this does not mean that other components are excluded unless otherwise stated, but rather that additional components may be further included.

One aspect of the present invention provides a waterproof moisture-permeable film comprising a porous film having: a hydrophobic region comprising a polyolefin; and a hydrophilic region comprising a hydrophilic polymer and a hydrophilic inorganic material dispersed in the hydrophobic region; wherein the content of the hydrophilic polymer in the porous film is 0.1 to 30 wt%.

In the porous film, the hydrophobic region and the hydrophilic region may constitute a continuous phase and a discontinuous phase, respectively. The hydrophobic region has a large surface tension when in contact with moisture, and thus can reduce the wettability of the film with respect to moisture to impart a required level of waterproofness to the film. The hydrophilic region may be uniformly dispersed in the matrix composed of the hydrophobic region to impart substantially uniform hydrophilicity throughout the entire region along the area and/or thickness direction of the porous film, thereby contributing to securing the affinity of the porous film for moisture and the resulting moisture permeability.

In the hydrophilic region, the hydrophilic polymer has a small surface tension when in contact with moisture and thus can contribute to imparting moisture permeability to the film by increasing the wettability of the film with respect to moisture, and the hydrophilic inorganic material not only has an affinity for moisture but also has hygroscopicity and/or water absorbency for absorbing moisture present around the porous film to induce or maintain a dry state, thereby contributing together with the hydrophilic polymer to increasing the wettability of the film with respect to moisture to impart moisture permeability to the film.

As used herein, the term "matrix" refers to a component constituting a continuous phase in a film comprising two or more components. That is, in the porous film, the hydrophobic region comprising the polyolefin may exist as a continuous phase, and within it, the hydrophilic region comprising the hydrophilic polymer may exist as a dispersed discontinuous phase.

The content of the hydrophilic polymer in the porous film may be 0.1 to 30 wt%. If the content of the hydrophilic polymer is less than 0.1 wt%, the required level of hydrophilicity and the resulting moisture permeability cannot be achieved, and if it exceeds 30 wt%, while hydrophilicity and moisture permeability may be further improved, the mechanical properties of the film achievable through the hydrophobic region comprising the polyolefin, in particular tensile strength and puncture strength, may decrease. In addition, if the content of the hydrophilic polymer exceeds 30 wt%, the dispersibility of the hydrophilic polymer decreases, the number of surface defects having a brightness different from the surroundings and a size of 2 mm or more on the surface of the porous film increases, and the appearance quality may deteriorate; furthermore, in sites and/or regions where the hydrophilic polymer is arbitrarily agglomerated on the surface and/or inside of the porous film, moisture permeability, waterproofness, and mechanical properties may change abruptly, reducing the reproducibility and reliability of the film.

The hydrophilic polymer may comprise, for example, one selected from the group consisting of ethylene vinyl acetate, ethylene vinyl alcohol, polyvinyl alcohol, polyacrylic acid, polyoxyethylene-polyoxypropylene block copolymer, polyethylene glycol, polyethylene oxide, polyvinylpyrrolidone, polyvinyl acetal, polyvinyl butyral, cellulose derivatives, polyurethane, polyamide, polyester, glycerol, and combinations of two or more thereof, and preferably may comprise ethylene vinyl acetate, and more preferably may comprise ethylene vinyl acetate having a vinyl acetate content of 15 to 30 wt%, but is not limited thereto. If the vinyl acetate content in the ethylene vinyl acetate is less than 15 wt%, the mechanical properties and hydrophilicity of the film may decrease, and if it exceeds 30 wt%, the processability and the resulting dispersibility of the hydrophilic polymer may decrease. Meanwhile, as the hydrophilic polymer, in addition to those described above, various types of hydrophilic polymers having hydrophilic functional groups such as amine groups, amide groups, hydroxyl groups, and carboxylic acid groups in the main chain and/or side chain may also be applied.

The content of the hydrophilic inorganic material in the porous film may be 0.1 to 30 wt%. If the content of the hydrophilic inorganic material is less than 0.1 wt%, the required level of hydrophilicity and the resulting moisture permeability cannot be achieved, and if it exceeds 30 wt%, while hydrophilicity and moisture permeability may be further improved, the mechanical properties of the film achievable through the hydrophobic region comprising the polyolefin, in particular tensile strength and puncture strength, may decrease. In addition, if the content of the hydrophilic inorganic material exceeds 30 wt%, the dispersibility of the hydrophilic inorganic material decreases, the number of surface defects having a brightness different from the surroundings and a size of 2 mm or more on the surface of the porous film increases, and the appearance quality may deteriorate; furthermore, in sites and/or regions where the hydrophilic inorganic material is arbitrarily agglomerated on the surface and/or inside of the porous film, moisture permeability, waterproofness, and mechanical properties may change abruptly, reducing the reproducibility and reliability of the film.

The hydrophilic inorganic material may comprise, for example, one selected from the group consisting of SiO₂, AlO(OH), Mg(OH)₂, Al(OH)₃, TiO₂, BaTiO₃, Li₂O, LiF, LiOH, Li₃N, BaO, Na₂O, Li₂CO₃, CaCO₃, LiAlO₂, Al₂O₃, SiO, SnO, SnO₂, PbO₂, ZnO, P₂O₅, CuO, MoO, V₂O₅, B₂O₃, Si₃N₄, CeO₂, Mn₃O₄, Sn₂P₂O₇, Sn₂B₂O₅, Sn₂BPO₆, talc, and combinations of two or more thereof, and preferably may comprise SiO₂, and more preferably may comprise fumed silica (fumed SiO₂), but is not limited thereto. Meanwhile, as the hydrophilic inorganic material, in addition to those described above, materials in which the surface of the hydrophilic inorganic material, which mainly exists in particulate form, has been modified with functional groups having affinity for the hydrophilic polymer and/or the polyolefin may also be applied.

The content of the hydrophilic region comprising the hydrophilic polymer and the hydrophilic inorganic material in the porous film may be 0.1 to 60 wt%. In other words, the total content of the hydrophilic polymer and the hydrophilic inorganic material in the porous film may be 0.1 to 60 wt%. If the content of the hydrophilic region is less than 0.1 wt%, the required level of hydrophilicity and the resulting moisture permeability cannot be achieved, and if it exceeds 60 wt%, while hydrophilicity and moisture permeability may be further improved, the mechanical properties of the film achievable through the hydrophobic region comprising the polyolefin, in particular tensile strength and puncture strength, may decrease, and the required level of waterproofness cannot be achieved. In addition, if the content of the hydrophilic region exceeds 60 wt%, the dispersibility of the hydrophilic region decreases, the number of surface defects having a brightness different from the surroundings and a size of 2 mm or more on the surface of the porous film increases, and the appearance quality may deteriorate; furthermore, in sites and/or regions where the hydrophilic region is arbitrarily agglomerated on the surface and/or inside of the porous film, moisture permeability, waterproofness, and mechanical properties may change abruptly, reducing the reproducibility and reliability of the film.

The polyolefin may comprise one selected from the group consisting of polyethylene, polypropylene, polybutylene, polymethylpentene, and combinations of two or more thereof, and preferably may comprise at least one of polyethylene and polypropylene, and more preferably may comprise polyethylene, but is not limited thereto.

Conventionally, a porous film consisting only of a polyolefin is inherently hydrophobic; however, by melting and kneading the polyolefin with a certain amount of hydrophilic polymer and/or hydrophilic inorganic material during film production, a predetermined level of hydrophilicity can be imparted to the film. In this case, by deriving and combining the molecular weight of the polyolefin and the contents of the hydrophilic polymer and/or hydrophilic inorganic material in the film as variables for optimizing and realizing the required levels of moisture permeability, waterproofness, and mechanical properties, the productivity of the process for melting and kneading the hydrophilic polymer and/or hydrophilic inorganic material with the polyolefin, as well as the moisture permeability, waterproofness, and mechanical properties of the film can be achieved in a balanced manner.

First, when the polyolefin comprises high-density polyethylene (HDPE), the weight average molecular weight of the high-density polyethylene may be 200,000 to 800,000, preferably 250,000 to 600,000, and more preferably 300,000 to 600,000; the content of the hydrophilic polymer in the porous film may be 0.1 to 25 wt%, 1 to 20 wt%, 5 to 20 wt%, or 10 to 20 wt%; the content of the hydrophilic inorganic material in the porous film may be 0.1 to 25 wt%, 1 to 20 wt%, 5 to 20 wt%, or 10 to 20 wt%; and the content of the hydrophilic region in the porous film may be 0.2 to 45 wt%, 10 to 40 wt%, 20 to 40 wt%, or 20 to 35 wt%. As used herein, the term "weight average molecular weight" may refer to a value determined by gel permeation chromatography (GPC) calibrated with polystyrene standards. Specifically, the measurement is performed at a temperature of 140°C using 1,2,4-trichlorobenzene as an eluent, followed by calculating the molecular weight distribution using a conventional size-exclusion chromatography calibration method for polyolefins.

If the content of the hydrophilic polymer in the porous film is less than 0.1 wt%, the required level of hydrophilicity and the resulting moisture permeability cannot be achieved, and if it exceeds 25 wt%, the content of the high-density polyethylene relatively decreases, and the mechanical properties of the film achievable through the hydrophobic region, in particular tensile strength and puncture strength, may decrease. If the content of the hydrophilic inorganic material in the porous film is less than 0.1 wt%, the required level of hydrophilicity and the resulting moisture permeability cannot be achieved, and if it exceeds 25 wt%, the content of the high-density polyethylene relatively decreases, and the mechanical properties of the film achievable through the hydrophobic region, in particular tensile strength and puncture strength, may decrease. In addition, if the content of the hydrophilic region in the porous film is less than 0.2 wt%, the required level of hydrophilicity and the resulting moisture permeability cannot be achieved, and if it exceeds 45 wt%, while hydrophilicity and moisture permeability may be further improved, the mechanical properties of the film achievable through the hydrophobic region comprising the high-density polyethylene, in particular tensile strength and puncture strength, may decrease, the required level of waterproofness cannot be achieved, and the appearance quality may deteriorate due to surface defects.

As described above, when the content of the hydrophilic region comprising the hydrophilic polymer and the hydrophilic inorganic material exceeds the upper limit, the hydrophilicity and moisture permeability of the film may be further improved, but the mechanical properties and waterproofness decrease. In response, by using high-density polyethylene (HDPE) and ultra-high molecular weight polyethylene (UHMWPE) in combination as the polyolefin, or by replacing high-density polyethylene (HDPE) with ultra-high molecular weight polyethylene (UHMWPE), the reduced mechanical properties and waterproofness can be effectively compensated and reinforced.

When the polyolefin comprises ultra-high molecular weight polyethylene, the content of the ultra-high molecular weight polyethylene in the hydrophobic region may be 20 to 100 wt%, preferably 30 to 100 wt%, and more preferably 50 to 100 wt%. When the content of the ultra-high molecular weight polyethylene in the hydrophobic region is less than 100 wt%, the remainder of the hydrophobic region may be composed of high-density polyethylene. If the content of the ultra-high molecular weight polyethylene in the hydrophobic region is less than 20 wt%, the mechanical properties and waterproofness that decrease due to the excessive application of the hydrophilic polymer and/or the hydrophilic inorganic material cannot be adequately compensated and reinforced.

The weight average molecular weight of the ultra-high molecular weight polyethylene may be 900,000 to 2,000,000, preferably 1,000,000 to 2,000,000, and more preferably 1,200,000 to 2,000,000; the content of the hydrophilic polymer in the porous film may be 25 to 30 wt%; the content of the hydrophilic inorganic material in the porous film may be 25 to 30 wt%; and the content of the hydrophilic region in the porous film may be 45 to 60 wt%.

The porosity of the porous film may be 60 to 90 vol%, preferably 70 to 85 vol%, and more preferably 70 to 80 vol%. If the porosity of the porous film is less than 60 vol%, moisture permeability may decrease, and if it exceeds 90 vol%, waterproofness and mechanical properties, in particular tensile strength and puncture strength, may decrease. The average pore size of the porous film may be 100 to 200 nm, preferably 110 to 180 nm, and more preferably 120 to 170 nm. If the average pore size of the porous film is less than 100 nm, moisture permeability may decrease, and if it exceeds 200 nm, waterproofness and mechanical properties, in particular tensile strength and puncture strength, may decrease.

The rate of change in machine direction (MD) length of a water droplet dropped to the surface of the porous film measured for 5 minutes immediately after the water droplet is dropped may be 20 to 50%, preferably 25 to 50%, and more preferably 30 to 45%; and the rate of change in transverse direction (TD) length may be 20 to 50%, preferably 25 to 50%, and more preferably 30 to 45%. When the maximum lengths of the water droplet dropped to the surface of the porous film in the machine direction (MD) and transverse direction (TD) immediately after application are defined as MD1 and TD1, and the maximum lengths in the machine direction (MD) and transverse direction (TD) at 5 minutes thereafter are defined as MD2 and TD2, the rates of change in length may be calculated by the following Equations 1 and 2. <Equation 1> $Machine direction \left(MD\right) rate of change in length \left(%\right) = \left(MD2-MD1\right) / \left(MD1\right) \times 100$ <Equation 2> $Transverse direction \left(TD\right) rate of change in length \left(%\right) = \left(TD2-TD1\right) / \left(TD1\right) \times 100$

The ratio of the machine direction (MD) rate of change in length to the transverse direction (TD) rate of change in length of the water droplet may be 0.9 to 1.0, preferably 0.95 to 1.0. If the ratio of the MD rate of change in length to the TD rate of change in length of the water droplet falls outside the above range, moisture permeation through the porous film may occur nonuniformly depending on the direction.

The moisture vapor transmission rate (MVTR) of the porous film measured in accordance with EN ISO 15496 may be 5,000 to 20,000 g/m²/24hr, preferably 8,000 to 20,000 g/m²/24hr, and more preferably 10,000 to 20,000 g/m²/24hr.

The porous film may satisfy at least one of the following conditions (i) to (iv).
(i) thickness of 1 to 30 µm, preferably 5 to 25 µm, and more preferably 10 to 20 µm; (ii) puncture strength of 500 gf or more, preferably 500 to 1,000 gf, and more preferably 700 to 1,000 gf; (iii) machine direction (MD) tensile strength of 1,000 to 3,000 kgf/cm², preferably 1,500 to 2,500 kgf/cm², and more preferably 1,500 to 2,000 kgf/cm²; (iv) transverse direction (TD) tensile strength of 1,000 to 3,000 kgf/cm², preferably 1,500 to 2,500 kgf/cm², and more preferably 1,500 to 2,000 kgf/cm².

The waterproof moisture-permeable film may be produced by a method comprising: (a) feeding a composition comprising a polyolefin, a hydrophilic polymer, a hydrophilic inorganic material, and a pore-forming agent into an extruder and forming a base sheet; and (b) stretching the base sheet and then extracting the pore-forming agent from the base sheet, or extracting the pore-forming agent from the base sheet and then stretching.

In step (a), a composition comprising 10 to 30 wt% of the polyolefin, 0.1 to 10 wt% of the hydrophilic polymer, 0.1 to 10 wt% of the hydrophilic inorganic material, and the balance of the pore-forming agent may be fed into the extruder to form a base sheet. The types, properties, and effects of the polyolefin, the hydrophilic polymer, and the hydrophilic inorganic material are as described above. The amounts of the polyolefin, the hydrophilic polymer, and the hydrophilic inorganic material fed may be adjusted so that the contents of the hydrophilic polymer and the hydrophilic inorganic material in the porous film are each 0.1 to 30 wt%, and their total content is 0.1 to 60 wt%.

The pore-forming agent may be one selected from the group consisting of paraffin oil, paraffin wax, mineral oil, solid paraffin, soybean oil, rapeseed oil, palm oil, coconut oil, di-2-ethylhexyl phthalate, dibutyl phthalate, diisononyl phthalate, diisodecyl phthalate, bis(2-propylheptyl) phthalate, naphthenic oil, and combinations of two or more thereof, and is preferably paraffin oil, and more preferably paraffin oil having a kinematic viscosity of 50 to 100 cSt at 40°C, but is not limited thereto.

In step (b), a porous film may be obtained by stretching the base sheet and then extracting the pore-forming agent, or by extracting the pore-forming agent from the base sheet and then stretching. The stretching may be performed by known methods such as uniaxial stretching or biaxial stretching (sequential or simultaneous). In the case of sequential biaxial stretching, the stretching ratio may be 4 to 20 times in each of the machine direction (MD) and the transverse direction (TD), and the resulting area ratio may be 16 to 400 times.

If necessary, the method may further comprise (c) heat-setting the porous film obtained in step (b). Heat-setting fixes the film and applies heat to forcibly hold the film that is trying to shrink, thereby removing residual stress. A higher heat-setting temperature is advantageous for reducing the shrinkage rate, but if the temperature is excessively high, the film may partially melt, causing the formed pores to close and reducing moisture permeability. The heat-setting temperature is preferably selected in a range where 10 to 30 wt% of the crystalline portion of the porous film melts. When the heat-setting temperature is selected within the above range, it is possible to prevent the problem of insufficient rearrangement of the polyolefin molecules in the porous film, which would result in no residual stress removal effect, and the problem of pore closure due to partial melting, which would reduce moisture permeability. For example, the heat-setting temperature may be 120 to 150°C, preferably 130 to 145°C, and the heat-setting time may be 5 seconds to 10 minutes, preferably 10 seconds to 1 minute.

Meanwhile, the laminate article according to another aspect of the present invention may comprise the waterproof moisture-permeable film; and at least one layer bonded in surface contact with the waterproof moisture-permeable film. The layer may comprise one selected from the group consisting of a textile layer, a polymer film layer, a natural leather layer, a synthetic leather layer, a fleece layer, and combinations of two or more thereof.

The laminate article may be a two-layer laminate comprising a textile layer adhered to at least one surface of the porous film. The laminate article may also be a three-layer laminate comprising a first textile layer adhered to one surface of the porous film and a second textile layer adhered to the other surface. Additionally, further layers may be applied to produce a multilayer laminate having 4, 5, 6, or more layers. The textile layer may comprise woven fabric, nonwoven fabric, knit, or the like. The textile layer may be natural and/or synthetic, such as cotton, wool, silk, jute, polyamide, polyester, acrylic, aramid, viscose, rayon, carbon fiber, or combinations thereof, but is not limited thereto. The polymer film layer may be, for example, polyolefin, polyester, polyamide, polyurethane, polyvinyl alcohol, polyvinyl acetate, fluoropolymer, polyvinyl halide, polyvinyl chloride, epoxy resin, silicone polymer, or combinations thereof, but is not limited thereto.

Hereinafter, examples of the present invention will be described in detail.

### 1. Content of Ethylene Vinyl Acetate in Film

### Example 1-1

17.3 parts by weight of polyethylene (HDPE, PE1) having a weight average molecular weight (Mw) of 600,000, 7.5 parts by weight of ethylene vinyl acetate (EVA) having a vinyl acetate content of 28 wt%, 5 parts by weight of fumed silica, 0.2 parts by weight of an antioxidant, and 70 parts by weight of paraffin oil having a kinematic viscosity of 70 cSt at 40°C were mixed and fed into a twin-screw extruder (inner diameter 58 mm, L/D = 56). Under conditions of a screw rotation speed of 40 rpm and 200°C, the mixture was discharged from the twin-screw extruder through a T-die having a width of 300 mm, and then passed through a casting roll at 40°C to prepare a base sheet having a thickness of 800 µm.

The base sheet was immersed in a dichloromethane leaching bath at 25°C for 1 minute to extract and remove the paraffin oil, and then dried at 50°C for 5 minutes. The base sheet was stretched 8 times in the machine direction (MD) using a roll stretcher at 110°C, and then stretched 8 times in the transverse direction (TD) using a tenter stretcher at 125°C to prepare a porous film.

### Example 1-2

A porous film was prepared in the same manner as in Example 1-1, except that the amounts of PE1 and EVA fed were changed to 18.8 parts by weight and 6 parts by weight, respectively.

### Example 1-3

A porous film was prepared in the same manner as in Example 1-1, except that the amounts of PE1 and EVA fed were changed to 19.8 parts by weight and 5 parts by weight, respectively.

### Example 1-4

A porous film was prepared in the same manner as in Example 1-1, except that the amounts of PE1 and EVA fed were changed to 21.8 parts by weight and 3 parts by weight, respectively.

### Example 1-5

A porous film was prepared in the same manner as in Example 1-1, except that the amounts of PE1 and EVA fed were changed to 23.3 parts by weight and 1.5 parts by weight, respectively.

### Example 1-6

A porous film was prepared in the same manner as in Example 1-1, except that the amounts of PE1 and EVA fed were changed to 24.5 parts by weight and 0.3 parts by weight, respectively.

### Example 1-7

A porous film was prepared in the same manner as in Example 1-1, except that the amounts of PE1 and EVA fed were changed to 24.71 parts by weight and 0.09 parts by weight, respectively.

### Example 1-8

10.8 parts by weight of polyethylene (HDPE, PE1) having a weight average molecular weight (Mw) of 600,000, 5 parts by weight of polyethylene (UHMWPE, PE2) having a weight average molecular weight (Mw) of 2,000,000, 9 parts by weight of ethylene vinyl acetate (EVA) having a vinyl acetate content of 28 wt%, 5 parts by weight of fumed silica, 0.2 parts by weight of an antioxidant, and 70 parts by weight of paraffin oil having a kinematic viscosity of 70 cSt at 40°C were mixed and fed into a twin-screw extruder (inner diameter 58 mm, L/D = 56). Under conditions of a screw rotation speed of 40 rpm and 200°C, the mixture was discharged from the twin-screw extruder through a T-die having a width of 300 mm, and then passed through a casting roll at 40°C to prepare a base sheet having a thickness of 800 µm.

The base sheet was immersed in a dichloromethane leaching bath at 25°C for 1 minute to extract and remove the paraffin oil, and then dried at 50°C for 5 minutes. The base sheet was stretched 8 times in the machine direction (MD) using a roll stretcher at 110°C, and then stretched 8 times in the transverse direction (TD) using a tenter stretcher at 125°C to prepare a porous film.

### Example 1-9

A porous film was prepared in the same manner as in Example 1-8, except that the amounts of PE1, PE2, and EVA fed were changed to 5 parts by weight, 10.8 parts by weight, and 9 parts by weight, respectively.

### Example 1-10

A porous film was prepared in the same manner as in Example 1-8, except that PE1 was not used and the amounts of PE2 and EVA fed were changed to 15.8 parts by weight and 9 parts by weight, respectively.

### Comparative Example 1-1

A porous film was prepared in the same manner as in Example 1-1, except that EVA was not used and the amount of PE1 fed was changed to 24.8 parts by weight.

### Comparative Example 1-2

A porous film was prepared in the same manner as in Example 1-1, except that the amounts of PE1 and EVA fed were changed to 15.8 parts by weight and 9 parts by weight, respectively.

### Comparative Example 1-3

A porous film was prepared in the same manner as in Example 1-1, except that the amounts of PE1 and EVA fed were changed to 14.9 parts by weight and 9.9 parts by weight, respectively.

### 2. Content of Fumed Silica in Film

### Example 2-1

A porous film was prepared in the same manner as in Example 1-1, except that the amounts of EVA and fumed silica fed were changed to 5 parts by weight and 7.5 parts by weight, respectively.

### Example 2-2

A porous film was prepared in the same manner as in Example 2-1, except that the amounts of PE1 and fumed silica fed were changed to 18.8 parts by weight and 6 parts by weight, respectively.

### Example 2-3

A porous film was prepared in the same manner as in Example 1-3.

### Example 2-4

A porous film was prepared in the same manner as in Example 2-1, except that the amounts of PE1 and fumed silica fed were changed to 21.8 parts by weight and 3 parts by weight, respectively.

### Example 2-5

A porous film was prepared in the same manner as in Example 2-1, except that the amounts of PE1 and fumed silica fed were changed to 23.3 parts by weight and 1.5 parts by weight, respectively.

### Example 2-6

A porous film was prepared in the same manner as in Example 2-1, except that the amounts of PE1 and fumed silica fed were changed to 24.5 parts by weight and 0.3 parts by weight, respectively.

### Example 2-7

A porous film was prepared in the same manner as in Example 2-1, except that the amounts of PE1 and fumed silica fed were changed to 24.71 parts by weight and 0.09 parts by weight, respectively.

### Example 2-8

A porous film was prepared in the same manner as in Example 1-8, except that the amounts of EVA and fumed silica fed were changed to 5 parts by weight and 9 parts by weight, respectively.

### Example 2-9

A porous film was prepared in the same manner as in Example 1-9, except that the amounts of EVA and fumed silica fed were changed to 5 parts by weight and 9 parts by weight, respectively.

### Example 2-10

A porous film was prepared in the same manner as in Example 1-10, except that the amounts of EVA and fumed silica fed were changed to 5 parts by weight and 9 parts by weight, respectively.

### Comparative Example 2-1

A porous film was prepared in the same manner as in Example 2-1, except that fumed silica was not used and the amount of PE1 fed was changed to 24.8 parts by weight.

### Comparative Example 2-2

A porous film was prepared in the same manner as in Example 2-1, except that the amounts of PE1 and fumed silica fed were changed to 15.8 parts by weight and 9 parts by weight, respectively.

### Comparative Example 2-3

A porous film was prepared in the same manner as in Example 2-1, except that the amounts of PE1 and fumed silica fed were changed to 14.9 parts by weight and 9.9 parts by weight, respectively.

### 3. Contents of Ethylene Vinyl Acetate and Fumed Silica in Film

### Example 3-1

11.8 parts by weight of polyethylene (UHMWPE, PE2) having a weight average molecular weight (Mw) of 2,000,000, 9 parts by weight of ethylene vinyl acetate (EVA) having a vinyl acetate content of 28 wt%, 9 parts by weight of fumed silica, 0.2 parts by weight of an antioxidant, and 70 parts by weight of paraffin oil having a kinematic viscosity of 70 cSt at 40°C were mixed and fed into a twin-screw extruder (inner diameter 58 mm, L/D = 56). Under conditions of a screw rotation speed of 40 rpm and 200°C, the mixture was discharged from the twin-screw extruder through a T-die having a width of 300 mm, and then passed through a casting roll at 40°C to prepare a base sheet having a thickness of 800 µm.

The base sheet was immersed in a dichloromethane leaching bath at 25°C for 1 minute to extract and remove the paraffin oil, and then dried at 50°C for 5 minutes. The base sheet was stretched 8 times in the machine direction (MD) using a roll stretcher at 110°C, and then stretched 8 times in the transverse direction (TD) using a tenter stretcher at 125°C to prepare a porous film.

### Example 3-2

10.8 parts by weight of polyethylene (HDPE, PE1) having a weight average molecular weight (Mw) of 600,000, 7 parts by weight of polyethylene (UHMWPE, PE2) having a weight average molecular weight (Mw) of 2,000,000, 6 parts by weight of ethylene vinyl acetate (EVA) having a vinyl acetate content of 28 wt%, 6 parts by weight of fumed silica, 0.2 parts by weight of an antioxidant, and 70 parts by weight of paraffin oil having a kinematic viscosity of 70 cSt at 40°C were mixed and fed into a twin-screw extruder (inner diameter 58 mm, L/D = 56). Under conditions of a screw rotation speed of 40 rpm and 200°C, the mixture was discharged from the twin-screw extruder through a T-die having a width of 300 mm, and then passed through a casting roll at 40°C to prepare a base sheet having a thickness of 800 µm.

The base sheet was immersed in a dichloromethane leaching bath at 25°C for 1 minute to extract and remove the paraffin oil, and then dried at 50°C for 5 minutes. The base sheet was stretched 8 times in the machine direction (MD) using a roll stretcher at 110°C, and then stretched 8 times in the transverse direction (TD) using a tenter stretcher at 125°C to prepare a porous film.

### Example 3-3

A porous film was prepared in the same manner as in Example 1-3.

### Comparative Example 3-1

A porous film was prepared in the same manner as in Example 3-1, except that the amounts of PE2 and EVA fed were changed to 8.8 parts by weight and 12 parts by weight, respectively.

### Comparative Example 3-2

A porous film was prepared in the same manner as in Example 3-1, except that the amounts of PE2, EVA, and fumed silica fed were changed to 5.8 parts by weight, 12 parts by weight, and 12 parts by weight, respectively.

### 4. Process Modification

### Example 4

19.8 parts by weight of polyethylene (HDPE, PE1) having a weight average molecular weight (Mw) of 600,000, 5 parts by weight of ethylene vinyl acetate (EVA) having a vinyl acetate content of 28 wt%, 5 parts by weight of fumed silica, 0.2 parts by weight of an antioxidant, and 70 parts by weight of paraffin oil having a kinematic viscosity of 70 cSt at 40°C were mixed and fed into a twin-screw extruder (inner diameter 58 mm, L/D = 56). Under conditions of a screw rotation speed of 40 rpm and 200°C, the mixture was discharged from the twin-screw extruder through a T-die having a width of 300 mm, and then passed through a casting roll at 40°C to prepare a base sheet having a thickness of 800 µm.

The base sheet was stretched 8 times in the machine direction (MD) using a roll stretcher at 110°C, and then stretched 2 times in the transverse direction (TD) using a tenter stretcher at 125°C, after which it was immersed in a dichloromethane leaching bath at 25°C for 1 minute to extract and remove the paraffin oil. After drying at 50°C for 5 minutes, the sheet was further stretched 4 times in the transverse direction (TD) using a tenter stretcher at 134°C to prepare a porous film.

### Comparative Example 4

A porous film comprising 70 wt% of polyethylene having a weight average molecular weight (Mw) of 3,150,000 and 30 wt% of polyethylene having a weight average molecular weight (Mw) of 500,000, and having a porosity of 64.9 vol%, was laminated onto a polyester fabric using a non-water-permeable polyurethane adhesive applied in a discrete dot pattern using a gravure coating roll such that the polyurethane adhesive covered approximately 35% of the film surface, and the polyurethane adhesive was then cured. This two-layer laminate film was gravure-coated at 17 g/m² with a hydrophilic polyurethane prepolymer mixture containing a thermosetting agent and then passed through an infrared oven for about 20 seconds to crosslink the polyurethane, thereby preparing a waterproof moisture-permeable film.

### Experimental Examples

The thickness, porosity, pore size, hydrophilicity, moisture permeability, waterproofness, tensile strength, and puncture strength of the porous films prepared in the above Examples and Comparative Examples were measured by the following methods. Unless otherwise specified for temperature, measurements were performed at room temperature (25°C), and the results are shown in Tables 1 to 5 below (Ex. = Example, C.Ex. = Comparative Example).
- Thickness (µm): The thickness of the porous film specimen was measured using a precision thickness gauge.
- Porosity (vol%): The porosity of a porous film specimen with a radius of 25 mm was measured in accordance with ASTM F316-03 using a Capillary Porometer from PMI.
- Pore size (nm): Using Image-Pro Plus from MediaCybernetics, pore portions and solid portions of the porous film specimen were identified based on brightness; portions that could not be identified or noise were corrected using the freehand tool; edge portions forming the outlines of pore portions and pore structures observed inside pore portions were identified as pore portions; and pore portions and solid portions were binarized. After binarization, continuous portions were regarded as one pore, and the area value of one pore was assumed to be the area value of a perfect circle to calculate the pore size (pore diameter). The porous film specimen was subdivided into regions of 2 µm × 2 µm, and the average pore size was calculated as the average of pore sizes measured for 10 regions.
- Hydrophilicity (%): The hydrophilicity of the porous film specimen was measured as follows. 2 µL of purified water was applied to the surface of the porous film, the size of the droplet formed immediately after application (MD 3.28 mm / TD 1.86 mm) and the size of the droplet spread after 5 minutes were measured in the machine direction (MD) and transverse direction (TD), and the rate of change in droplet size (length) in each direction was calculated.
- Moisture permeability (MVTR, g/m²/24hr): The MVTR of the porous film specimen was measured in accordance with DIN EN ISO 15496.
- Waterproofness: The porous film specimen was clamped between rubber gaskets of a fixture and sealed. Water was sprayed at a pressure of 0.07 bar (1 psig) for 3 minutes onto a region with a diameter of approximately 10.8 cm (4.25 inches) on one side of the specimen, and waterproofness was evaluated based on whether water was observed on the other side of the specimen (O: water not observed; X: water observed).
- Tensile strength (kgf/cm²): Using a tensile strength tester, the stress applied until fracture occurred in the machine direction (MD) and transverse direction (TD) was measured for a porous film specimen of size 20 mm × 200 mm.
- Puncture strength (gf): Using a puncture strength tester, the force applied until the specimen was punctured by a stick was measured for a porous film specimen of size 100 mm × 50 mm.

**[Table 1]**

| Item | Unit | Ex. 1-1 | Ex. 1-2 | Ex. 1-3 | Ex. 1-4 | Ex. 1-5 | Ex. 1-6 |
|---|---|---|---|---|---|---|---|
| PE1 | parts by weight | 17.3 | 18.8 | 19.8 | 21.8 | 23.3 | 24.5 |
| PE2 | parts by weight | 0 | 0 | 0 | 0 | 0 | 0 |
| EVA | parts by weight | 7.5 | 6 | 5 | 3 | 1.5 | 0.3 |
| Fumed silica | parts by weight | 5 | 5 | 5 | 5 | 5 | 5 |
| Antioxidant | parts by weight | 0.2 | 0.2 | 0.2 | 0.2 | 0.2 | 0.2 |
| Paraffin oil | parts by weight | 70 | 70 | 70 | 70 | 70 | 70 |
| Total | parts by weight | 100 | 100 | 100 | 100 | 100 | 100 |
| EVA content in film | wt% | 25.0 | 20.0 | 16.7 | 10.0 | 5.0 | 1.0 |
| Fumed silica content in film | wt% | 16.7 | 16.7 | 16.7 | 16.7 | 16.7 | 16.7 |
| Thickness | µm | 20 | 20 | 20 | 20 | 20 | 20 |
| Porosity | vol% | 75 | 77 | 80 | 78 | 78 | 76 |
| Pore size | nm | 198.0 | 165.0 | 150.0 | 139.5 | 125.6 | 119.3 |
| MD droplet length change rate | % | 35.7 | 34.0 | 32.5 | 30.9 | 28.1 | 22.6 |
| TD droplet length change rate | % | 36.1 | 34.4 | 32.8 | 31.2 | 28.4 | 24.2 |
| Moisture permeability | g/m²/24hr | 14611 | 13915 | 13283 | 12650 | 11500 | 9890 |
| Waterproofness | - | O | O | O | O | O | O |
| MD tensile strength | kgf/cm² | 1519 | 1526 | 1561 | 1603 | 1610 | 1624 |
| TD tensile strength | kgf/cm² | 1450 | 1457 | 1490 | 1530 | 1537 | 1550 |
| Puncture strength | gf | 720 | 733 | 751 | 770 | 771 | 780 |

**[Table 2]**

| Item | Unit | Ex. 1-7 | Ex. 1-8 | Ex. 1-9 | Ex. 1-10 | C.Ex. 1-1 | C.Ex. 1-2 | C.Ex. 1-3 |
|---|---|---|---|---|---|---|---|---|
| PE1 | parts by weight | 24.71 | 10.8 | 5 | 0 | 24.8 | 15.8 | 14.9 |
| PE2 | parts by weight | 0 | 5 | 10.8 | 15.8 | 0 | 0 | 0 |
| EVA | parts by weight | 0.09 | 9 | 9 | 9 | 0 | 9 | 9.9 |
| Fumed silica | parts by weight | 5 | 5 | 5 | 5 | 5 | 5 | 5 |
| Antioxidant | parts by weight | 0.2 | 0.2 | 0.2 | 0.2 | 0.2 | 0.2 | 0.2 |
| Paraffin oil | parts by weight | 70 | 70 | 70 | 70 | 70 | 70 | 70 |
| Total | parts by weight | 100 | 100 | 100 | 100 | 100 | 100 | 100 |
| EVA content in film | wt% | 0.3 | 30.0 | 30.0 | 30.0 | 0.0 | 30.0 | 33.0 |
| Fumed silica content in film | wt% | 16.7 | 16.7 | 16.7 | 16.7 | 16.7 | 16.7 | 16.7 |
| Thickness | µm | 20 | 20 | 20 | 20 | 20 | 20 | 20 |
| Porosity | vol% | 75 | 77 | 82 | 85 | 76 | 76 | 78 |
| Pore size | nm | 107.3 | 196.0 | 192.1 | 182.5 | 109.0 | 219.8 | 237.4 |
| MD droplet length change rate | % | 20.3 | 37.4 | 37.5 | 36.8 | 17.9 | 37.6 | 37.9 |
| TD droplet length change rate | % | 21.8 | 37.8 | 37.3 | 37.1 | 19.6 | 37.3 | 38.2 |
| Moisture permeability | g/m²/24hr | 8901 | 15307 | 15460 | 15000 | 4960 | 14700 | 15450 |
| Waterproofness | - | ○ | ○ | ○ | ○ | ○ | ○ | ○ |
| MD tensile strength | kgf/cm² | 1652 | 1715 | 1684 | 1626 | 1577 | 993 | 875 |
| TD tensile strength | kgf/cm² | 1576 | 1636 | 1607 | 1552 | 1505 | 950 | 838 |
| Puncture strength | gf | 797 | 763 | 801 | 817 | 727 | 462 | 497 |

**[Table 3]**

| Item | Unit | Ex. 2-1 | Ex. 2-2 | Ex. 2-3 | Ex. 2-4 | Ex. 2-5 | Ex. 2-6 |
|---|---|---|---|---|---|---|---|
| PE1 | parts by weight | 17.3 | 18.8 | 19.8 | 21.8 | 23.3 | 24.5 |
| PE2 | parts by weight | 0 | 0 | 0 | 0 | 0 | 0 |
| EVA | parts by weight | 5 | 5 | 5 | 5 | 5 | 5 |
| Fumed silica | parts by weight | 7.5 | 6 | 5 | 3 | 1.5 | 0.3 |
| Antioxidant | parts by weight | 0.2 | 0.2 | 0.2 | 0.2 | 0.2 | 0.2 |
| Paraffin oil | parts by weight | 70 | 70 | 70 | 70 | 70 | 70 |
| Total | parts by weight | 100 | 100 | 100 | 100 | 100 | 100 |
| EVA content in film | wt% | 16.7 | 16.7 | 16.7 | 16.7 | 16.7 | 16.7 |
| Fumed silica content in film | wt% | 25.0 | 20.0 | 16.7 | 10.0 | 5.0 | 1.0 |
| Thickness | µm | 20 | 20 | 20 | 20 | 20 | 20 |
| Porosity | vol% | 72 | 76 | 80 | 77 | 79 | 75 |
| Pore size | nm | 200.0 | 166.7 | 150.0 | 140.9 | 126.8 | 120.5 |
| MD droplet length change rate | % | 35.3 | 33.7 | 32.5 | 30.6 | 27.8 | 22.4 |
| TD droplet length change rate | % | 35.7 | 34.0 | 32.8 | 30.9 | 28.1 | 24.0 |
| Moisture permeability | g/m²/24hr | 13968 | 13303 | 13283 | 12093 | 10994 | 9455 |
| Waterproofness | - | ○ | ○ | ○ | ○ | ○ | ○ |
| MD tensile strength | kgf/cm² | 1473 | 1480 | 1561 | 1555 | 1562 | 1575 |
| TD tensile strength | kgf/cm² | 1376 | 1383 | 1458 | 1452 | 1458 | 1471 |
| Puncture strength | gf | 706 | 719 | 751 | 755 | 755 | 765 |

**[Table 4]**

| Item | Unit | Ex. 2-7 | Ex. 2-8 | Ex. 2-9 | Ex. 2-10 | C.Ex. 2-1 | C.Ex. 2-2 | C.Ex. 2-3 |
|---|---|---|---|---|---|---|---|---|
| PE1 | parts by weight | 24.71 | 10.8 | 5 | 0 | 24.8 | 15.8 | 14.9 |
| PE2 | parts by weight | 0 | 5 | 10.8 | 15.8 | 0 | 0 | 0 |
| EVA | parts by weight | 5 | 5 | 5 | 5 | 5 | 5 | 5 |
| Fumed silica | parts by weight | 0.09 | 9 | 9 | 9 | 0 | 9 | 9.9 |
| Antioxidant | parts by weight | 0.2 | 0.2 | 0.2 | 0.2 | 0.2 | 0.2 | 0.2 |
| Paraffin oil | parts by weight | 70 | 70 | 70 | 70 | 70 | 70 | 70 |
| Total | parts by weight | 100 | 100 | 100 | 100 | 100 | 100 | 100 |
| EVA content in film | wt% | 16.7 | 16.7 | 16.7 | 16.7 | 16.7 | 16.7 | 16.7 |
| Fumed silica content in film | wt% | 0.3 | 30.0 | 30.0 | 30.0 | 0.0 | 30.0 | 33.0 |
| Thickness | µm | 20 | 20 | 20 | 20 | 20 | 20 | 20 |
| Porosity | vol% | 75 | 76 | 80 | 83 | 74 | 75 | 77 |
| Pore size | nm | 108.4 | 198.0 | 194.0 | 184.3 | 110.0 | 222.0 | 239.7 |
| MD droplet length change rate | % | 20.1 | 37.0 | 37.1 | 36.4 | 17.7 | 37.2 | 37.5 |
| TD droplet length change rate | % | 21.6 | 37.4 | 36.9 | 36.7 | 19.4 | 36.9 | 37.8 |
| Moisture permeability | g/m²/24hr | 8509 | 14633 | 14779 | 14340 | 4742 | 14054 | 14771 |
| Waterproofness | - | ○ | ○ | ○ | ○ | ○ | ○ | ○ |
| MD tensile strength | kgf/cm² | 1602 | 1664 | 1633 | 1577 | 1530 | 975 | 849 |
| TD tensile strength | kgf/cm² | 1496 | 1553 | 1525 | 1473 | 1429 | 913 | 795 |
| Puncture strength | gf | 781 | 748 | 785 | 801 | 712 | 453 | 489 |

**[Table 5]**

| Item | Unit | Ex. 3-1 | Ex. 3-2 | Ex. 3-3 | C.Ex. 3-1 | C.Ex. 3-2 | Ex. 4 | C.Ex. 4 |
|---|---|---|---|---|---|---|---|---|
| PE1 | parts by weight | 0 | 10.8 | 19.8 | 0 | 0 | 19.8 | - |
| PE2 | parts by weight | 11.8 | 7 | 0 | 8.8 | 5.8 | 0 | - |
| EVA | parts by weight | 9 | 6 | 5 | 12 | 12 | 5 | - |
| Fumed silica | parts by weight | 9 | 6 | 5 | 9 | 12 | 5 | - |
| Antioxidant | parts by weight | 0.2 | 0.2 | 0.2 | 0.2 | 0.2 | 0.2 | - |
| Paraffin oil | parts by weight | 70 | 70 | 70 | 70 | 70 | 70 | - |
| Total | parts by weight | 100 | 100 | 100 | 100 | 100 | 100 | - |
| EVA content in film | wt% | 30.0 | 20.0 | 16.7 | 40.0 | 40.0 | 16.7 | - |
| Fumed silica content in film | wt% | 30.0 | 20.0 | 16.7 | 30.0 | 40.0 | 16.7 | - |
| Thickness | µm | 20 | 20 | 20 | 20 | 20 | 20 | - |
| Porosity | vol% | 82 | 80 | 80 | 78 | 79 | 81 | 64.9 |
| Pore size | nm | 199.7 | 181.5 | 150.0 | 235.6 | 240.3 | 145.7 | - |
| MD droplet length change rate | % | 40.7 | 36.4 | 32.5 | 44.8 | 49.3 | 33.1 | 18.4 |
| TD droplet length change rate | % | 41.1 | 36.7 | 32.8 | 45.3 | 49.8 | 34.2 | 24.6 |
| Moisture permeability | g/m²/24hr | 15407 | 14673 | 13283 | 16793 | 18808 | 13549 | 4922 |
| Waterproofness | - | ○ | ○ | ○ | X | X | ○ | ○ |
| MD tensile strength | kgf/cm² | 1417 | 1464 | 1561 | 912 | 819 | 1537 | 866 |
| TD tensile strength | kgf/cm² | 1344 | 1388 | 1479 | 869 | 782 | 1395 | 826 |
| Puncture strength | gf | 812 | 774 | 751 | 471 | 447 | 768 | 491 |

The foregoing description of the present invention is for illustrative purposes only, and those skilled in the art to which the present invention pertains will understand that it is possible to easily modify the invention into other specific forms without changing the technical spirit or essential features of the present invention. Therefore, the embodiments described above should be understood in all respects as illustrative and not restrictive. For example, each component described as a single type may be implemented in a distributed manner, and likewise, components described as distributed may also be implemented in a combined form.

The scope of the present invention is indicated by the following claims, and all changes or modifications derived from the meaning and scope of the claims and their equivalent concepts should be interpreted as being included within the scope of the present invention.

## Claims

1. A waterproof moisture-permeable film comprising a porous film having:
a hydrophobic region comprising a polyolefin; and a hydrophilic region comprising a hydrophilic polymer and a hydrophilic inorganic material dispersed in the hydrophobic region,
wherein the content of the hydrophilic polymer in the porous film is 0.1 to 30 wt%.

2. The waterproof moisture-permeable film according to claim 1, wherein the content of the hydrophilic inorganic material in the porous film is 0.1 to 30 wt%.

3. The waterproof moisture-permeable film according to claim 1, wherein the content of the hydrophilic region in the porous film is 0.1 to 60 wt%.

4. The waterproof moisture-permeable film according to claim 3, wherein the weight average molecular weight of the polyolefin is 200,000 to 800,000, the content of the hydrophilic polymer in the porous film is 0.1 to 25 wt%, the content of the hydrophilic inorganic material in the porous film is 0.1 to 25 wt%, and the content of the hydrophilic region in the porous film is 0.2 to 45 wt%.

5. The waterproof moisture-permeable film according to claim 3, wherein the weight average molecular weight of the polyolefin is 900,000 to 2,000,000, the content of the hydrophilic polymer in the porous film is 25 to 30 wt%, the content of the hydrophilic inorganic material in the porous film is 25 to 30 wt%, and the content of the hydrophilic region in the porous film is 45 to 60 wt%.

6. The waterproof moisture-permeable film according to claim 1, wherein the polyolefin comprises one selected from the group consisting of polyethylene, polypropylene, polybutylene, polymethylpentene, and combinations of two or more thereof.

7. The waterproof moisture-permeable film according to claim 1, wherein the hydrophilic polymer comprises one selected from the group consisting of ethylene vinyl acetate, ethylene vinyl alcohol, polyvinyl alcohol, polyacrylic acid, polyoxyethylene-polyoxypropylene block copolymer, polyethylene glycol, polyethylene oxide, polyvinylpyrrolidone, polyvinyl acetal, polyvinyl butyral, cellulose derivatives, polyurethane, polyamide, polyester, glycerol, and combinations of two or more thereof.

8. The waterproof moisture-permeable film according to claim 1, wherein the hydrophilic inorganic material comprises one selected from the group consisting of SiO₂, AlO(OH), Mg(OH)₂, Al(OH)₃, TiO₂, BaTiO₃, Li₂O, LiF, LiOH, Li₃N, BaO, Na₂O, Li₂CO₃, CaCO₃, LiAlO₂, Al₂O₃, SiO, SnO, SnO₂, PbO₂, ZnO, P₂O₅, CuO, MoO, V₂O₅, B₂O₃, Si₃N₄, CeO₂, Mn₃O₄, Sn₂P₂O₇, Sn₂B₂O₅, Sn₂BPO₆, talc, and combinations of two or more thereof.

9. The waterproof moisture-permeable film according to claim 1, wherein the porosity of the porous film is 60 to 90 vol%.

10. The waterproof moisture-permeable film according to claim 1, wherein the average pore size of the porous film is 100 to 200 nm.

11. The waterproof moisture-permeable film according to claim 1, wherein the rate of change in machine direction (MD) length of a water droplet dropped to the surface of the porous film measured for 5 minutes immediately after the water droplet is dropped is 20 to 50%, and the rate of change in transverse direction (TD) length is 20 to 50%.

12. The waterproof moisture-permeable film according to claim 1, wherein the moisture vapor transmission rate (MVTR) of the porous film measured in accordance with EN ISO 15496 is 5,000 to 20,000 g/m²/24hr.

13. The waterproof moisture-permeable film according to claim 1, wherein the porous film satisfies at least one of the following conditions (i) to (iv): (i) thickness of 1 to 30 µm, (ii) puncture strength of 500 gf or more, (iii) machine direction (MD) tensile strength of 1,000 to 3,000 kgf/cm², (iv) transverse direction (TD) tensile strength of 1,000 to 3,000 kgf/cm².

14. A laminate article comprising: the waterproof moisture-permeable film according to any one of claims 1 to 13; and at least one layer bonded in surface contact with the waterproof moisture-permeable film.

15. The laminate article according to claim 14, wherein the layer comprises one selected from the group consisting of a textile layer, a polymer film layer, a natural leather layer, a synthetic leather layer, a fleece layer, and combinations of two or more thereof.
